# EUROPEAN PATENT SPECIFICATION

(11) **EP 1 935 126 B1**
(45) Date of publication and mention of the grant of the patent: **25.09.2013**
(21) Application number: 06799201.6
(22) Date of filing: 13.10.2006
(51) Int. Cl.: H04W 16/14

(54) **METHOD OF FREQUENCY CHANNEL ASSIGNMENT USING EFFECTIVE SPECTRUM SENSING IN MULTIPLE FA SYSTEM**
VERFAHREN ZUR FREQUENZKANALZUWEISUNG UNTER VERWENDUNG EFFEKTIVER SPEKTRUM-MESSUNG IN EINEM MEHRFACH-FA-SYSTEM
PROCÉDÉ D'ATTRIBUTION DE VOIES DE FRÉQUENCES PAR DÉTECTION DE SPECTRE EFFICACE DANS UN SYSTÈME À MULTIPLES FA

(30) Priority: 14.10.2005 KR 20050097113; 10.10.2006 KR 20060098640
(43) Date of publication of application: 25.06.2008
(60) Divisional application: 12175502.9
(73) Proprietor: Electronics and Telecommunications Research Institute, Daejeon-city 305-350 (KR)
(72) Inventor: KANG, Bub-Joo, Daejeon-city 302-120 (KR); SONG, Myung-Sun, Daejeon-city 305-755 (KR); KIM, Chang-Joo, Daejeon-city 305-761 (KR)
(74) Representative: Betten & Resch
(86) International application number: PCT/KR2006/004123
(87) International publication number: WO 2007/043827

(56) References cited:
- EP-A1- 1 248 477
- WO-A2-2004/070988
- IEEE STD 802.11H TM PART: '11: Wireless LAN Medium Access Control(MAC) and Physical Layer(PHY) specifications Amendment 5: Spectrum and Transmit Power Management Extensions in 5 GHz band in Europe' IEEE COMPUTER SOCIETY 14 October 2003, pages 29 - 33, AND 46 - 52
- MA WEN AND LUO HANWEN: 'Radar detection for 802.11a systems in 5 GHz band' WIRELESS COMMUNICATIONS, NETWORKING AND MOBILE COMPUTING 2005. PROCEEDINGS. 2005 INTERNATIONAL CONFERENCE vol. 1, 23 September 2005 - 26 September 2005, pages 492 - 494, XP010856191
- GHASEMI A. AND SOUSA E.S.: 'Collaborative spectrum sensing for opportunities access in fading environments' NEW FRONTIERS IN DYNAMIC SPECTRUM ACCESS NETWORKS, 2005. DYSPAN 2005. 2005 FIRST IEEE INTERNATIONAL SYMPOSIUM 08 November 2005 - 11 November 2005, pages 131 - 136, XP010855109

## Description

### TECHNICAL FIELD

The present invention relates to a method of assigning a frequency channel usin g efficient spectrum sensing in a multiple Frequency Assignment (FA) system, and mor e particularly, to a method of assigning a frequency channel using efficient spectrum se nsing in a multiple FA system, whereby a frequency channel is assigned to a secondary user, which requests channel assignment, using set information of channel states with out a primary user experiencing interference noise while the multiple FA system classifi es frequency channels that are licensed and allowed to the primary user into an active s et, a candidate set, and an occupied set according to usage states and manages the cl assified frequency channels.

### BACKGROUND ART

Demands of services using wireless communication are rapidly increasing, but fr equency bands having good transmission characteristics and which are easy in terms o f component development are already occupied. Thus, cognitive radio technology is u sed for a secondary user who desires to provide a new service using unused frequency channels found by temporally and spatially checking frequency channels that are licens ed and allowed to a primary user. The primary user and the secondary user are comm unication systems operated by different services or operators and are described below.

The present invention corresponds to technology, which is being standardized by IEEE 802.22, and in more detail, functional requirements are being determined in orde r to create a standardization draft.

According to the IEEE 802.22 standardization, it is desired that a wireless Interne t service is provided using time and space unused by the primary user of TV or wireless devices using a TV frequency band or a frequency band currently used for wireless mi crophone communication (e.g., a frequency band from 54 MHz to 698 MHz correspondi ng to TV channel numbers 2 to 51 in the United States, or a frequency band from 41 M Hz to 910 MHz internationally). In order for an IEEE 802.22 system (a Base Station (B S), a Customer Premises Equipment (CPE), and a core network) to use the assigned T V frequency band, the BS of the secondary user and the CPE, which is a terminal of the secondary user, must know a current state of the frequency channels. To do this, the BS and the terminal of the secondary user always monitor a channel usage state by sc anning the current TV frequency channels, i.e., the frequency band from 41 MHz to 910 MHz. Therefore, when the primary user desires to use a frequency channel being u sed by the secondary user, the secondary user can quickly hand over the frequency ch annel to the primary user.

As described above, the present invention is related to a method of sensing and managing frequency channels when 6, 7, or 8 MHz is set as a single frequency channel from the frequency band from 41 MHz to 910 MHz assigned to TV broadcasting in a m ultiple Frequency Assignment (FA) system, i.e., an IEEE 802.22 standard system, and i s similar to Dynamic Frequency Selection (DFS) technology suggested by IEEE 802.16.

The DFS technology suggested by IEEE 802.16 is a technology of scanning for a wireless data communication service in an unlicensed bandwidth to determine whether frequency channels of a primary user are used, assigning a frequency channel unused by the primary user to the wireless data communication service, releasing the frequenc y channel from the wireless data communication service by using a BS according to a r equest of the primary user, and assigning a new channel to the wireless data communic ation service.

In this point of view, a technology field related to spectrum sensing in a multiple FA system according to an embodiment of the present invention is almost the same as t he field of spectrum sensing technology of IEEE 802.22 and the DFS technology of IEE E 802.16.

However, in the conventional DFS technology of IEEE 802.16, in order to provide a wireless Internet service in an unlicensed bandwidth, a method used by a BS for req uesting a terminal for measurement of a state of a selected frequency channel and rece iving a measured result is used. In the conventional method, the BS only passively ac quires information regarding the state of frequency channels licensed to a primary user, and thus, communication quality degradation and communication impediment of the pr imary user may occur due to a decrease in the reliability of the spectrum sensing in a pr ocess of assigning or changing a frequency channel to a new secondary user using the passively acquired state information, and data transmission efficiency may decrease du e to an increase of an overhead signal such as a frequency channel state sensing requ est message.

Thus, in order to assign frequency channels licensed to a primary user to a new secondary user without affecting communication quality of the primary user, a BS of the secondary user must always maintain optimum information on the state of the frequen cy channels licensed to the primary user.

In order to do this, terminals and the BS of the secondary user must actively dete rmine the state of the frequency channels licensed to the primary user using the spectru m sensing. In addition, for the spectrum sensing, instead of a simple periodic sensing method, an efficient method of changing a sensing period in consideration of whether th e primary user uses the frequency channels is required.

EP1 248 477 A describes method and device for controlling dynamic frequency selection within a wireless communication system in response to radar-like interference signal, the method comprising continuously or quasi-continuously monitoring and assessing one or more frequencies with respect to the radar-like interference signals, allocating a quality parameter to each assessed frequency, the quality parameter indicating a probability that the frequency is occupied, and selecting one or more frequencies in dependence on the allocated quality parameters.

WO 2004 070988 A2 describes methods for implementing a frequency selection (DFS) and a temporary channel selection feature for WLAN devices. Various regulatory domains promulgate standards to define how wireless devices should operate in certain frequency bands. The 5 GHz spectrum is of particular importance to certain regulatory domains because of radar systems also operating in this spectrum. To avoid interference with such radar systems, wireless devices operating in this spectrum should be able to detect radar and quickly vacate any channels currently used by the radar systems. In a channel switching technique, if the new channel is radar-exempt, normal operation commences on the new channel. If the new channel is non-radar-exempt, normal operation commences on a temporary radar-exempt channel and an aggregate background scan can be performed on the new channel. If no radars are detected using the aggregate background scan, then operation is switched from the temporary radar-exempt channel to the new channel. This channel switching technique minimizes disruption to users during a radar event.

### DESCRIPTION OF THE DRAWINGS

The above and other features and advantages of the present invention will beco me more apparent by describing in detail exemplary embodiments thereof with referenc e to the attached drawings in which:
FIG. 1 is a channel state transition diagram according to 4 channel state sets to which an embodiment of the present invention is applied;
FIG. 2 is a flowchart illustrating a method of assigning a frequency channel using efficient spectrum sensing in a Base Station (BS) of a secondary user according to an embodiment of the present invention;
FIG. 3 is a data structure of downstream/upstream frames of a Wireless Regiona I Area Network (WRAN) according to an embodiment of the present invention; and
FIG. 4 is a flowchart illustrating a method of assigning a frequency channel using efficient spectrum sensing in a terminal of a secondary user according to an embodim ent of the present invention.

### DETAILED DESCRIPTION OF THE INVENTION TECHNICAL PROBLEM

The present invention provides a method of assigning a frequency channel using efficient spectrum sensing in a multiple Frequency Assignment (FA) system, whereby a frequency channel is assigned to a secondary user, which requests channel assignm ent, using set information of channel states without a primary user experiencing interfer ence noise while the multiple FA system classifies frequency channels that are licensed and allowed to the primary user into an active set, a candidate set, a null set, and an o ccupied set according to usage states and manages the classified frequency channels.

That is, the present invention provides a method of assigning a frequency chann el using efficient spectrum sensing in a multiple FA system, whereby while the multiple FA system scans the state of multiple frequency channels (e.g., frequency channels of a TV frequency band from 41 MHz to 910 MHz), classifies the frequency channels into f our types of sets (an active set, a candidate set, a null set, and an occupied set), and m anages the classified frequency channels, a frequency channel unused by a primary us er is detected and assigned at high speed to a secondary user requesting new frequenc y channel assignment, and if the appearance of the primary user is detected, the freque ncy channel is released a short time later.

### TECHNICAL SOLUTION

According to an aspect of the present invention, there is provided a channel assignment method applied to a Base Station (BS) of a secondary user to which a frequenc y channel licensed to a primary user is assigned in a multiple FA system, the method co mprising: a channel sensing process, wherein the BS classifies multiple frequency chan nels licensed to the primary user into a plurality of channel state sets according to usag e states, periodically senses channel states by changing a sensing period according to t ypes of the classified channel state sets, and manages the sensed channel states as fr equency channel state set information; a channel state set broadcasting process, wher ein the BS transmits the frequency channel state set information managed in the chann el sensing process to secondary user terminals using a broadcast message; and a cha nnel assigning process, wherein if the BS receives a channel assignment request mess age from a new secondary user terminal which has received the broadcast message, th e BS assigns an unused frequency channel from among frequency channels licensed t o the primary user to the new secondary user terminal using the frequency channel stat e set information. The method may further comprise a channel state set information u pdating process, wherein the BS updates the frequency channel state set information b y periodically receiving 'frequency channel state set information of the secondary user t erminal' from the secondary user terminal to which the frequency channel is assigned.

According to another aspect of the present invention, there is provided a channel assignment method applied to a terminal of a secondary user to which a frequency ch annel licensed to a primary user is assigned in a multiple FA system, the method compr ising: a channel state set information receiving process, wherein the secondary user ter minal receives frequency channel state set information of multiple frequency channels li censed to the primary user from a BS of the secondary user using a broadcast messag e and manages the received frequency channel state set information; a channel assigni ng process, wherein the secondary user terminal requests the BS for channel assignme nt using the frequency channel state set information and the BS assigns an unused freq uency channel from among frequency channels licensed to the primary user to the seco ndary user terminal; and a channel state set information reporting process, wherein the secondary user terminal periodically senses channel states of the multiple frequency ch annels licensed to the primary user by changing a sensing period according to types of channel state sets, updates the frequency channel state set information according to th e sensing result, and reports the updated frequency channel state set information to the BS. The method may further comprise an updated information transmitting process, wherein after receiving the frequency channel state set information in the channel state set information receiving process, the secondary user terminal updates the received fre quency channel state set information by scanning states of downstream/upstream frequ ency channels with the BS and transmits the updated frequency channel state set infor mation to the BS.

### ADVANTAGEOUS EFFECTS

As described above, according to the present invention, there is provided technol ogy related to a spectrum sensing process of detecting a usage state of a frequency ch annel of a primary user, interference noise power, and detecting the appearance of the primary user by performing spectrum sensing of frequency channels of a licensed band width (e.g., a TV frequency band) of an existing system when a new multiple Frequency Assignment (FA) system, such as a Wireless Regional Area Network (WRAN) system, provides a wireless data communication service using the licensed bandwidth. The most important part of the technology is that the primary user must not experience com munication quality degradation or communication impediment even though the new mul tiple FA system provides a wireless Internet service using the same frequency band.

Thus, unlike the prior art of requesting the scanning of a selected frequency cha nnel, performing of spectrum sensing of the selected frequency channel, and reporting of a measured result, by using a periodic sensing method of classifying states of a plura lity of frequency channels assigned to the new multiple FA system into four types of set s (an active set, a candidate set, a null set, and an occupied set) and varying a sensing period according to the classified types of sets, the number of signal messages related t o the sensing can be reduced, the spectrum sensing can be performed at high speed, a nd channel assignment and channel change can be optimized using the four types of s et information. That is, a frequency channel can be assigned to a new secondary user without the primary user experiencing interference noise.

### MODE FOR INVENTION

The objectives, characteristics, and merits of the present invention will be describ ed in detail by explaining preferred embodiments of the invention with reference to the a ttached drawings, so that those of ordinary skill in the art can easily implement the spirit and scope of the present invention. In the following description, well-known functions or constructions are not described in detail since they would obscure the invention with unnecessary detail. Hereinafter, the present invention will be described more fully wit h reference to the accompanying drawings, in which exemplary embodiments of the inv ention are shown.

The present invention will now be generally described.

According to an embodiment of the present invention, when a multiple Frequenc y Assignment (FA) system performs a new wireless data communication service in an u nlicensed bandwidth or a licensed bandwidth (e.g., a TV frequency band), the multiple FA system classifies states of frequency channels into four types of sets (an active set, a candidate set, a null set, and an occupied set) and manages the classified frequency channels, wherein the multiple FA system efficiently manages the frequency channels b y changing a sensing period according to the types of sets.

Table 1 illustrates the definition of channel state sets so as to aid understanding of the present invention.

**[Table 1]**

| | |
|---|---|
| First active set | A set of used channels for a certain Customer Premises Equipment (C PE) |
| Second active set | A set of used channels for a certain Base Station (BS) |
| Candidate/Backup se | A set of clean channels available for a certain CPE or BS |
| Occupied set | A set of occupied channels by incumbent user which a certain CPE fin s |
| Disallowed set | A set of channels whose access are not allowed by regulation |
| Null set | A set of channels that are not classified as one of above five sets |

Table 1 will now be described. The active set indicates downstream/upstream f requency channels assigned to secondary user terminals. The active set includes the first active set and the second active set. The candidate set (although the term 'candid ate/backup set' is used in Table 1, 'candidate set' will be used hereinafter) indicates do wnstream and upstream frequency channels unused by primary users and not assigned to any secondary user terminal (CPE). The occupied set indicates frequency channel s being used by primary users.

Since the disallowed set is not often changed, the disallowed set is excluded fro m a channel management scenario.

That is, the channel state sets, i.e., the first active set, the second active set, the candidate set, the occupied set, and the null set, are defined for efficient management and managed by BSs and terminals of a secondary user. In detail, each BS manages the active set, the candidate set, the occupied set, and the null set, and each secondar y user terminal also manages the active set, the candidate set, the occupied set, and th e null set.

Each channel state set is updated in every sensing period of each channel set b y the multiple FA system, and the minimum channel set update period is an active set s ensing period.

In the present invention, the purpose of classifying frequency channels of a multi pie FA system, such as a Wireless Regional Area Network (WRAN) system, into a plura lity of types of sets as illustrated in Table 1 and managing the classified frequency chan nels in a BS is to vary a sensing period according to the states of the frequency channel s and efficiently assign and change a frequency channel to each secondary user termin al.

According to a spectrum sensing method, a sensing period must be differently se t according to the types of sets. For the active set, when primary users desire to use fr equency channels assigned to secondary user terminals, the frequency channels must be released at high speed, and thus, the sensing period must be the shortest. For the candidate set, since usage states and measurement levels of frequency channels belon ging to the candidate set must be scanned, the sensing period must be of intermediate ength. For the occupied set, since frequency channels belonging to the occupied set a re being used by primary users, the sensing period must be the longest.

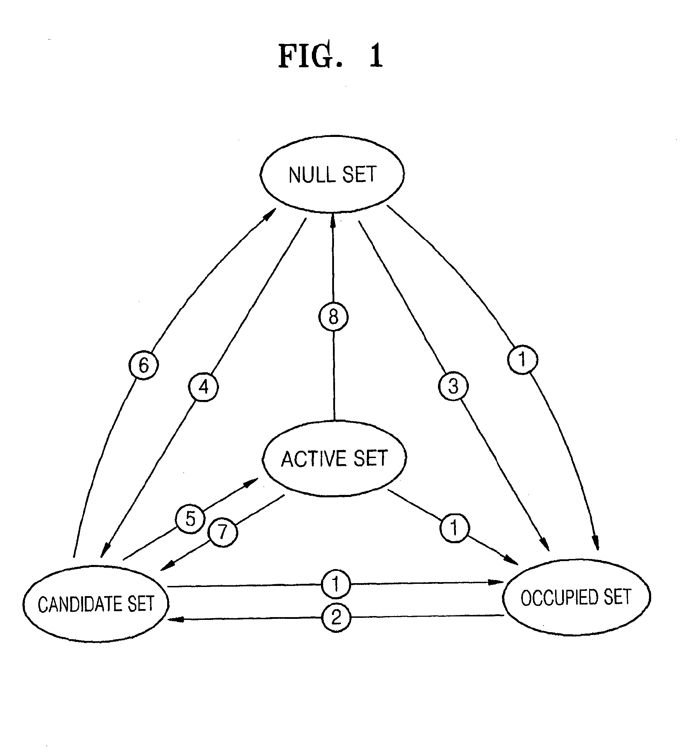

FIG. 1 is a channel state transition diagram according to 4 channel state sets to which an embodiment of the present invention is applied. Transitions according to the reference numerals illustrated in FIG. 1 will now be described.

The transition according to reference numeral 1: frequency channels belonging t o a null set, an active set, and a candidate set become elements of an occupied set wh en an incumbent service appears. That is, when the incumbent service appears, a sec ondary user system cannot use the frequency channels.

The transition according to reference numeral 2: when the quality of a frequency channel released from the incumbent service satisfies a specific quality threshold and is better than the quality of any element belonging to the candidate set, the released freq uency channel becomes an element of the candidate set.

The transition according to reference numeral 3: when the quality of the frequenc y channel released from the incumbent service does not satisfy the specific quality thre shold or is worse than the quality of all elements belonging to the candidate set, the rele ased frequency channel becomes an element of the null set.

The transition according to reference numeral 4: when quality of an element belo nging to the null set satisfies the specific quality threshold and is better than quality of a ny element belonging to the candidate set, the element belonging to the null set becom es an element of the candidate set.

The transition according to reference numeral 5: when an element of the candida te set is activated due to a new connection of a WRAN service, the element of the cand idate set becomes an element of the active set.

The transition according to reference numeral 6: when the quality of an element belonging to the candidate set does not satisfy the specific quality threshold or is worse than the quality of elements which has become elements of the candidate set due to th e transitions according to reference numerals 2, 4, and 7, the element belonging to the candidate set becomes an element of the null set.

The transition according to reference numeral 7: when the quality of an element of the active set, which has been released due to usage termination, satisfies the specif ic quality threshold and is better than the quality of any element belonging to the candid ate set, the released element becomes an element of the candidate set.

The transition according to reference numeral 8: when the quality of a frequency channel released from the WRAN service does not satisfy the specific quality threshold or is worse than the quality of all elements belonging to the candidate set, the released frequency channel becomes an element of the null set.

In general, a quality threshold used to distinguish the candidate set from the null set according to a spectrum sensing result can be represented by an interference noise spectral density, and in reality, the quality threshold is determined as the magnitude of a specific noise spectral density for maintaining link quality of a WRAN uplink/downlink.

Thus, since the specific quality threshold is determined from the performance of the WRAN uplink/downlink and a sensing receiver structure, in an embodiment of the prese nt invention, a specific value cannot be suggested as the specific quality threshold.

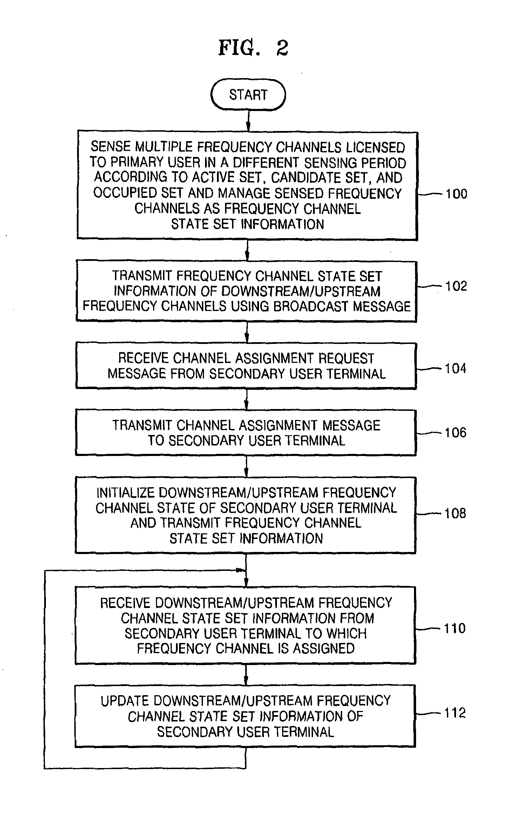

FIG. 2 is a flowchart illustrating a method of assigning a frequency channel using efficient spectrum sensing in a Base Station (BS) of a secondary user according to an embodiment of the present invention.

The BS (this means the BS of the secondary user and is simply called 'BS' herei nafter) periodically performs the spectrum sensing after a communication channel with a secondary user terminal is established. In addition, the BS transmits its frequency c hannel state set information using a broadcast message to secondary user terminals wi th which no communication channel is established.

Referring to FIG. 2, the BS classifies multiple frequency channels licensed to a p rimary user into a plurality of channel state sets according to usage states, periodically senses channel states by changing a sensing period according to types of the classified channel state sets, and manages the sensed channel states as frequency channel stat e set information in operation 100.

The BS transmits the frequency channel state set information to secondary user terminals using a broadcast message in operation 102. A new secondary user termina I, which has received the broadcast message, transmits a channel assignment request message to the BS for the assignment of a frequency channel.

If the BS receives the channel assignment request message from the new secon dary user terminal in operation 104, the BS transmits a channel assignment message to the new secondary user terminal in operation 106. That is, if the BS receives the cha nnel assignment request message from the new secondary user terminal, the BS can a ssign at least one downstream and upstream frequency channel to the new secondary user terminal. The BS assigns an unused frequency channel from among frequency c hannels licensed to the primary user to the new secondary user terminal using the frequ ency channel state set information.

When the new secondary user terminal transmits the channel assignment reque st message to the BS, the new secondary user terminal performs ranging, authenticatio n, and registration processes and then transmits the channel assignment request mess age to the BS using an upstream channel used to perform the three processes.

After assigning the frequency channel to the new secondary user terminal, the B S initializes a downstream/upstream frequency channel state set for the new secondary user terminal to which the frequency channel has been assigned and transmits the fre quency channel state set information to the new secondary user terminal in operation 1 08. Thereafter, the BS sets a periodic spectrum sensing mode for the new secondary user terminal to which the frequency channel has been assigned.

In the periodic spectrum sensing mode, the new secondary user terminal transmi ts downstream/upstream frequency channel state set information scanned and updated by the new secondary user terminal to the BS. That is, in operation 110, the BS recei ves downstream/upstream frequency channel state set information from the new secon dary user terminal to which the frequency channel has been assigned, and in operation 112, the BS updates downstream/upstream frequency channel state set information of t he new secondary user terminal.

If the appearance of a primary user to the frequency channel assigned to the sec ondary user terminal is detected by using a process of periodically receiving a report fro m the secondary user terminal (referred to as operations 110 and 112) or a sensing pro cess of the BS, the BS releases the frequency channel from the secondary user termin al and assigns another frequency channel to the secondary user terminal.

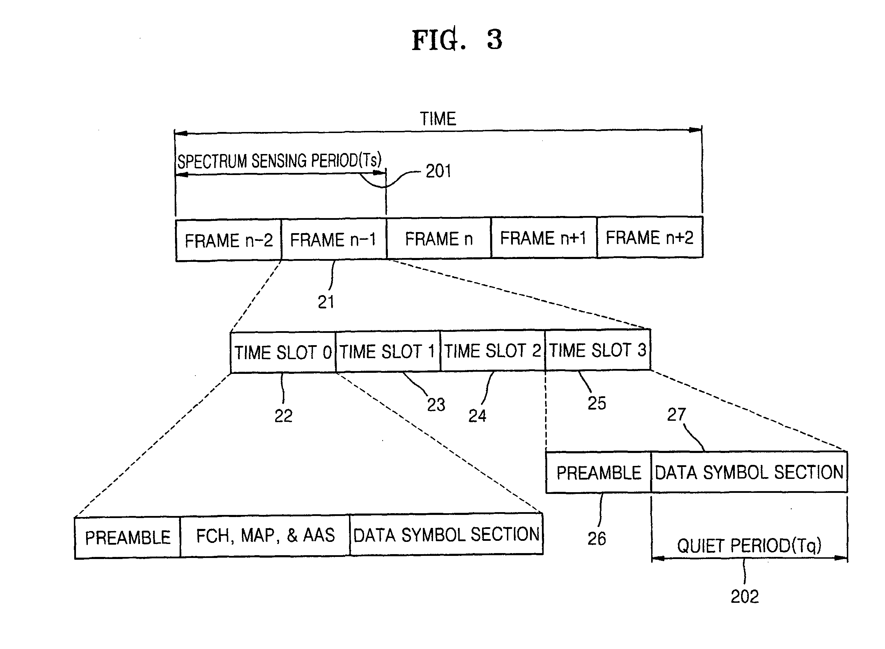

In order for the BS and the secondary user terminal to scan frequency channels belonging to the active set, a quiet period (referring to *T_{q}* 202 of FIG. 3) must be set.

FIG. 3 is a data structure of downstream/upstream frames of a WRAN system ac cording to an embodiment of the present invention. Referring to FIG. 3, a spectrum se nsing period *Tₛ* 201 and a quiet period *T_{q}* 202 of the active set are set. The quiet pe riod *T_{q}* 202 depends on an execution speed of a spectrum sensing algorithm.

The spectrum sensing period *Tₛ* 201 must be set to the minimum time for releas ing a frequency channel after detecting whether a primary user uses the frequency cha nnel.

FIG. 3 shows a basic frame structure of downstream and upstream frequency ch annels, wherein a single frame 21 includes 4 time slots 22 through 25. In this time slot structure, a time slot0 22 includes bursts including a broadcast message, and a time sl ot1 23, a time slot2 24, and a time slot3 25 do not include a broadcast message but incl ude a preamble 26 and a data symbol section 27. In the current embodiment, the quie t period *T_{q}* 202 is randomly included in one of the time slot1 23, the time slot2 24, and the time slot3 25.

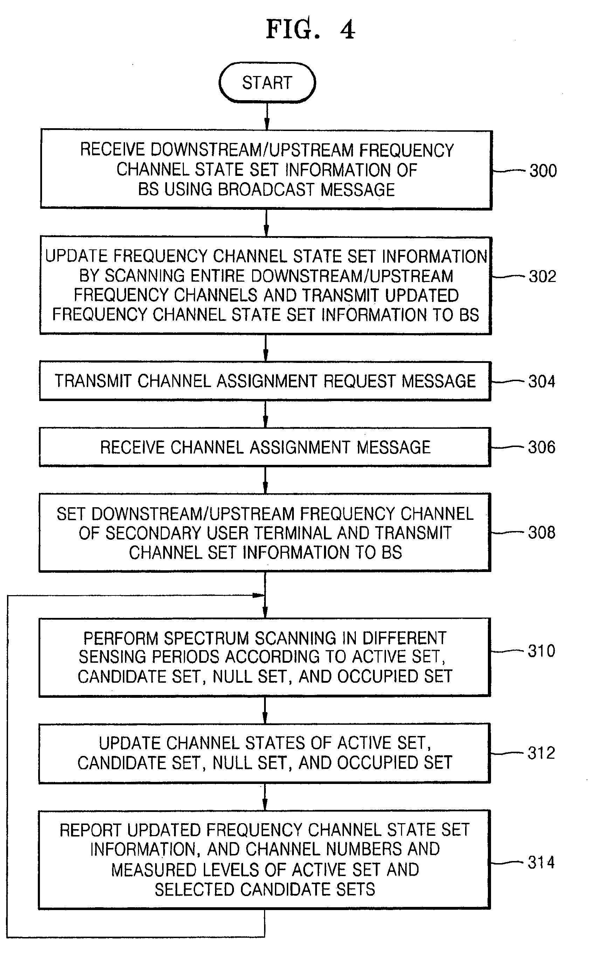

FIG. 4 is a flowchart illustrating a method of assigning a frequency channel using efficient spectrum sensing in a terminal of a secondary user according to an embodim ent of the present invention.

A spectrum sensing method of the secondary user terminal can be classified into two types. The first type is a sensing method used until a communication channel is established after the secondary user terminal is turned on; and the second type is a peri odic spectrum sensing method used after the communication channel is established.

Referring to FIG. 4, in an initial spectrum sensing process, when the secondary u ser terminal selects a downstream frequency channel, the secondary user terminal rece ives downstream/upstream frequency channel state set information of a BS of the seco ndary user using a broadcast message of the selected frequency channel in operation 3 00. The secondary user terminal scans channel states of entire downstream/upstream frequency channels in order to scan channel states of frequency channels around the secondary user terminal, updates the frequency channel state set information received i n operation 300 according to the scanning result, and transmits the updated frequency channel state set information to the BS in operation 302.

The secondary user terminal transmits a channel assignment request message t o the BS using the frequency channel state set information in operation 304 and receive s a channel assignment message from the BS in response in operation 306. At least o ne downstream and upstream frequency channel is assigned to the secondary user ter minal through the channel assignment message.

The secondary user terminal sets a downstream/upstream frequency channel a mong the at least one downstream and upstream frequency channel assigned by using the channel assignment message and transmits the channel set information to the BS i n operation 308.

After the downstream/upstream frequency channel of the secondary user termin al is set, the secondary user terminal performs periodic spectrum sensing (scanning) ac cording to a spectrum sensing period differently set for the active set, the candidate set, the null set, and the occupied set in operation 310. The spectrum sensing (scanning) performed by the secondary user terminal is basically the same as that performed by t he BS.

The periodic spectrum sensing performed by the secondary user terminal is acco mplished by performing the following procedures.

The secondary user terminal performs spectrum scanning of the active set, the c andidate set, the null set, and the occupied set according to different sensing periods in operation 310. The secondary user terminal updates channel states of the active set, the candidate set, and the occupied set according to the scanning result in operation 3 12. The secondary user terminal reports the updated frequency channel state set infor mation to the BS and reports channel numbers and measured levels of the active set a nd a maximum of up to 5 selected candidate sets to the BS in operation 314. Operatio ns 310 through 314 are repeatedly performed. Thus, the BS updates frequency chann el state set information using the reported information.

The invention can also be embodied as computer readable codes on a computer readable recording medium. The computer readable recording medium is any data st orage device that can store data which can be thereafter read by a computer system. Examples of the computer readable recording medium include read-only memory (ROM ), random-access memory (RAM), CD-ROMs, magnetic tapes, floppy disks, optical data storage devices, and carrier waves (such as data transmission through the internet). The computer readable recording medium can also be distributed over network coupled computer systems so that the computer readable code is stored and executed in a dist ributed fashion.

While the present invention has been particularly shown and described with refer ence to exemplary embodiments thereof, it will be understood by those of ordinary skill i n the art that various changes in form and details may be made therein without departin g from the scope of the present invention as defined by the following claims.

## Claims

1. A channel assignment method applied to a Base Station (BS) of a secondary user to which a frequency channel licensed to a primary user is assigned in a multiple Frequency Assignment (FA) system, the method **characterized by** comprising:
a channel sensing process (100), wherein the BS classifies multiple frequency channels licensed to the primary user into a plurality of channel state sets according to usage states, periodically senses channel states by changing a sensing period according to types of the classified channel state sets, and manages the sensed channel states as frequency channel state set information;
a channel state set broadcasting process (102), wherein the BS transmits the frequency channel state set information managed in the channel sensing process to secondary user terminals using a broadcast message; and
a channel assigning process (106, 108, 110), wherein if the BS receives a channel assignment request message from a new secondary user terminal which has received the broadcast message, the BS assigns an unused frequency channel from among frequency channels licensed to the primary user to the new secondary user terminal using the frequency channel state set information.

2. The method of claim 1, further comprising a channel state set information updating process (112), wherein the BS updates the frequency channel state set information by periodically receiving frequency channel state set information of the secondary user terminal from the secondary user terminal to which the frequency channel is assigned.

3. The method of claim 1 or 2, wherein in the channel state set classification process of the channel sensing process (100), frequency channels assigned to the secondary user belong to an active set, frequency channels unused by the primary user and not assigned to any secondary user belong to a candidate set, frequency channels used by primary users belong to an occupied set, and frequency channels allowed but not belonging to the active set, the candidate set, or the occupied set belong to a null set.

4. The method of claim 3, wherein the sensing period increases in the order of the active set, the candidate set, the null set, and the occupied set.

5. The method of claim 4, wherein in the channel assigning process, if the appearance of the primary user for the frequency channel assigned to the secondary user is sensed, the channel assignment to the secondary user is released.

6. The method of claim 5, wherein in the channel assigning process, when th e frequency channel is assigned, a plurality of frequency channels are assigned.

7. A channel assignment method applied to a terminal of a secondary user to which a frequency channel licensed to a primary user is assigned in a multiple Frequency Assignment (FA) system, the method **characterized by** comprising:
a channel state set information receiving process (300), wherein the secondary user terminal receives frequency channel state set information of multiple frequency channels licensed to the primary user from a Base Station (BS) of the secondary user using a broadcast message and manages the received frequency channel state set information;
a channel assigning process (304, 306), wherein the secondary user terminal requests the BS for channel assignment using the frequency channel state set information and the BS assigns an unused frequency channel from among frequency channels licensed to the primary user to the secondary user terminal; and
a channel state set information reporting process (310, 312, 314), wherein the secondary user terminal periodically senses channel states of the multiple frequency channels licensed to the primary user by changing a sensing period according to types of channel state sets updates the frequency channel state set information according to the sensing result, and reports the updated frequency channel state set information to the BS.

8. The method of claim 7, further comprising an updated information transmitting process (314), wherein after receiving the frequency channel state set information in the channel state set information receiving process, the secondary user terminal updates the received frequency channel state set information by scanning states of downstream/upstream frequency channels with the BS and transmits the updated frequency channel state set information to the BS.

9. The method of claim 8, wherein in the updated information transmitting process (314), channel numbers and electronic wave measurement levels of an active set and a predetermined number of selected candidate sets are transmitted with the updated frequency channel state set information.

10. The method of any one of claims 7 through 9, wherein the frequency channel state set information comprises an active set which is a set of frequency channels assigned to the secondary user, a candidate set which is a set of frequency channels un used by the primary user and not assigned to any secondary user, an occupied set whi h is a set of frequency channels used by primary users, and a null set which is a set of frequency channels allowed but not belonging to the active set, the candidate set, or the occupied set.

11. The method of claim 10, wherein the sensing period increases in the order of the active set, the candidate set and the occupied set.

## Patentansprüche

1. Kanalzuweisungsverfahren, das auf eine erste Basisstation (BS) eines sekundären Anwenders angewendet wird, an den ein Frequenzkanal, der einem primären Anwender bewilligt ist, in einem Multiple-Frequency-Assignment-System (FA) zugewiesen wird, wobei das Verfahren **dadurch gekennzeichnet ist, dass** es umfasst:
einen Kanalabtastprozess (100), wobei die BS mehrere Frequenzkanäle, die dem primären Anwender bewilligt sind, in eine Mehrzahl von Kanalzustandssets entsprechend den Anwendungszuständen klassifiziert, periodisch Kanalzustände durch Ändern einer Abtastperiode entsprechend den Typen der klassifizierten Kanalzustandssets abtastet, und die abgetasteten Kanalzustände als Frequenzkanalzustandssetinformationen verwaltet;
einen Kanalzustandssetübertragungsprozess (102), wobei die BS die Frequenzkanalzustandssetinformationen, die in dem Kanalabtastprozess verwaltet werden, an Endgeräte von sekundären Anwendern unter Verwendung einer Übertragungsnachricht sendet; und
einen Kanalzuweisungsprozess (106, 108, 108), wobei wenn die BS eine Kanalzuweisungsanforderungsnachricht von einem neuen Endgerät eines sekundären Anwenders, der die Übertragungsnachricht empfangen hat, empfängt, die BS einen nicht verwendeten Frequenzkanal von den Frequenzkanälen, die dem primären Anwender bewilligt sind, dem neuen Endgerät eines sekundären Nutzers unter Verwendung der Frequenzkanalzustandssetinformationen zuweist.

2. Verfahren nach Anspruch 1, ferner umfassend einen Kanalzustandssetinformationenaktualisierungsprozess (112), wobei die BS die Frequenzkanalzustandssetinformationen durch periodisches Empfangen von Frequenzkanalzustandssetinformationen des Endgeräts eines sekundären Nutzers von dem Endgerät eines sekundären Nutzers, an den der Frequenzkanal zugewiesen ist, aktualisiert.

3. Verfahren nach Anspruch 1 oder 2, wobei in dem Kanaizustandssetklassifizierungsprozess des Kanalabtastprozesses (100), Frequenzkanäle, die an den sekundären Anwender zugewiesen sind, zu einem Aktivset gehören, Frequenzkanäle, die nicht durch den primären Anwender verwendet werden und die nicht an einen sekundären Anwender zugewiesen sind, zu einem Kandidatenset gehören, Frequenzkanäle, die von primären Anwendern verwendet werden, zu einem Belegtset gehören, und Frequenzkanäle, die erlaubt sind, aber nicht zu dem Aktivset, dem Kandidatenset oder dem Belegtset gehören, zu einem Nullset gehören.

4. Verfahren nach Anspruch 3, wobei die Abtastperiode sich in der Reihenfolge des Aktivsets, des Kandidatensets, des Nullsets und des Belegtsets erhöht.

5. Verfahren nach Anspruch 4, wobei in dem Kanalzuweisungsprozess die Kanalzuweisung an den sekundären Anwender freigegeben wird, wenn das Auftreten des primären Anwenders für den Frequenzkanal, der dem sekundären Anwender zugewiesen ist, abgetastet wird.

6. Verfahren nach Anspruch 5, wobei in dem Kanalzuweisungsprozess eine Mehrzahl von Frequenzkanälen zugewiesen werden, wenn der Frequenzkanal zugewiesen wird.

7. Kanalzuweisungsverfahren, das auf ein Endgerät eines sekundären Anwenders angewendet wird, an den ein Frequenzkanal, der einem primären Anwender bewilligt ist, in einem Multiple-Frequency-Assignment-System (FA) zugewiesen wird, wobei das Verfahren **dadurch gekennzeichnet ist, dass** es umfasst:
einen Kanalzustandssetinformationenempfangsprozess (300), wobei das Endgerät eines sekundären Anwenders Frequenzkanalzustandssetinformationen von mehreren Frequenzkanälen, die dem primären Anwender bewilligt sind von einer Basisstation (BS) des sekundären Anwenders unter Verwendung einer Übertragungsnachricht empfängt und die empfangenen Frequenzkanalzustandssetinformationen verwaltet;
einen Kanalzuweisungsprozess (304, 306), wobei das Endgerät eines sekundären Anwenders eine Kanalzuweisung bei der Basisstation unter Verwendung der Frequenzkanalzustandssetinformationen anfordert und die Basisstation einen nicht verwendeten Frequenzkanal von den Frequenzkanälen, die dem primären Anwender bewilligt sind, dem Endgerät eines sekundären Anwenders zuweist; und
einen Kanalzustandssetinformationenberichtprozess (310, 312, 314), wobei das Endgerät eines sekundären Anwenders periodisch Kanalzustände der mehreren Frequenzkanäle, der einem primären Anwender bewilligt sind, durch Ändern einer Abtastperiode entsprechend den Typen der Kanalzustandssets abtastet, die Frequenzkanalzustandssetinformationen entsprechend des Abtastergebnisses aktualisiert, und die aktualisierten Frequenzkanalzustandssetinformationen der Basisstation berichtet.

8. Verfahren nach Anspruch 7, ferner umfassend einen aktualisierten Informationensendeprozess (314), wobei nach dem Empfangen der Kanalzustandssetinformationen in dem Kanalzustandssetinformationenempfangsprozess das Endgerät eines sekundären Anwenders die empfangenen Frequenzkanalzustandssetinformationen durch Scannen von Zuständen von Downstream/Upstream-Frequenzkanälen mit der Basisstation aktualisiert und die aktualisierten Frequenzkanalzustandssetinformationen an die Basisstation sendet.

9. Verfahren nach Anspruch 8, wobei in dem aktualisierten Informationensendeprozess (314) Kanalnummern und elektronische Wellenmesspegel eines Aktivsets und eine vorherbestimmte Anzahl von ausgewählten Kandidatensets mit den aktualisierten Frequenzkanalzustandssetinformationen gesendet werden.

10. Verfahren nach Ansprüchen 7 bis 9, wobei die Frequenzkanalzustandssetinformationen ein Aktivset, dass ein Set von dem sekundären Anwender zugewiesenen Frequenzkanälen ist, ein Kandidatenset, dass ein Set von Frequenzkanälen ist, die von den primären Anwender nicht verwendet werden und keinem sekundären Anwender zugewiesenen sind, ein Belegtset, das ein Set von von primären Anwendern verwendeten Frequenzkanälen ist, und ein Nullset, das ein Set von erlaubten Frequenzkanälen ist, die nicht zu dem Aktivset, dem Kandidatenset oder dem Belegtset gehören, umfassen.

11. Verfahren nach Anspruch 10, wobei die Abtastperiode sich in der Reihenfolge des Aktivsets, des Kandidatensets, des Nullsets und des Belegtsets erhöht.

## Revendications

1. Procédé d'assignation de canal appliqué à une station de base (BS) d'un utilisateur secondaire auquel un canal de fréquences concédé à un utilisateur primaire est assigné dans un système d'assignation de fréquence (FA) multiple, le procédé **caractérisé en ce qu'**il comprend :
un processus de détection de canal (100), dans lequel la BS classifie des canaux de fréquences multiples concédés à l'utilisateur primaire en une pluralité d'ensembles d'état de canal selon des états d'utilisation, détecte périodiquement des états de canal en changeant une période de détection selon des types des ensembles d'état de canal classifiés, et gère les états de canal détectés comme informations d'ensemble d'état de canal de fréquences ;
un processus de diffusion d'ensemble d'état de canal (102), dans lequel la BS transmet les informations d'ensemble d'état de canal de fréquences gérées dans le processus de détection de canal à des terminaux d'utilisateurs secondaires en utilisant un message de diffusion ; et
un processus d'assignation de canal (106, 108, 110), dans lequel si la BS reçoit un message de demande d'assignation de canal en provenance d'un nouveau terminal d'utilisateur secondaire qui a reçu le message de diffusion, la BS assigne un canal de fréquences inutilisé parmi des canaux de fréquences concédés à l'utilisateur primaire au nouveau terminal d'utilisateur secondaire en utilisant les informations d'ensemble d'état de canal de fréquences.

2. Procédé selon la revendication 1, comprenant en outre un processus de mise à jour d'informations d'ensemble d'état de canal (112), dans lequel la BS met à jour les informations d'ensemble d'état de canal de fréquences en recevant périodiquement des informations d'ensemble d'état de canal de fréquences du terminal d'utilisateur secondaire en provenance du terminal d'utilisateur secondaire auquel le canal de fréquences est assigné.

3. Procédé selon la revendication 1 ou 2, dans lequel, dans le processus de classification d'ensemble d'état de canal du processus de détection de canal (100), des canaux de fréquences assignés à l'utilisateur secondaire appartiennent à un ensemble actif, des canaux de fréquences non utilisés par l'utilisateur primaire et non assignés à un quelconque utilisateur secondaire appartiennent à un ensemble candidat, des canaux de fréquences utilisés par des utilisateurs primaires appartiennent à un ensemble occupé, et des canaux de fréquences autorisés mais n'appartenant pas à l'ensemble actif, à l'ensemble candidat, ou à l'ensemble occupé appartiennent à un ensemble vide.

4. Procédé selon la revendication 3, dans lequel la période de détection augmente dans l'ordre de l'ensemble actif, l'ensemble candidat, l'ensemble vide, et l'ensemble occupé.

5. Procédé selon la revendication 4, dans lequel, dans le processus d'assignation de canal, si l'apparition de l'utilisateur primaire pour le canal de fréquences assigné à l'utilisateur secondaire est détectée, l'assignation de canal à l'utilisateur secondaire est libérée.

6. Procédé selon la revendication 5, dans lequel, dans le processus d'assignation de canal, lorsque le canal de fréquences est assigné, une pluralité de canaux de fréquences sont assignés.

7. Procédé d'assignation de canal appliqué à un terminal d'un utilisateur secondaire auquel un canal de fréquences concédé à un utilisateur primaire est assigné dans un système d'assignation de fréquence (FA) multiple, le procédé **caractérisé en ce qu'**il comprend :
un processus de réception d'informations d'ensemble d'état de canal (300), dans lequel le terminal d'utilisateur secondaire reçoit des informations d'ensemble d'état de canal de fréquences de canaux de fréquences multiples concédés à l'utilisateur primaire en provenance d'une station de base (BS) de l'utilisateur secondaire en utilisant un message de diffusion et gère les informations d'ensemble d'état de canal de fréquences reçues ;
un processus d'assignation de canal (304, 306), dans lequel le terminal d'utilisateur secondaire demande à la BS l'assignation de canal en utilisant les informations d'ensemble d'état de canal de fréquences et la BS assigne un canal de fréquences inutilisé parmi des canaux de fréquences concédés à l'utilisateur primaire au terminal utilisateur secondaire ; et
un processus de rapport d'informations d'ensemble d'état de canal (310, 312, 314), dans lequel le terminal d'utilisateur secondaire détecte périodiquement des états de canal des canaux de fréquences multiples concédés à l'utilisateur primaire en changeant une période de détection selon des types d'ensembles d'état de canal, met à jour les informations d'ensemble d'état de canal de fréquences selon le résultat de détection, et rapporte les informations d'ensemble d'état de canal de fréquences mises à jour à la BS.

8. Procédé selon la revendication 7, comprenant en outre un processus de transmission d'informations mises à jour (314), dans lequel, après la réception des informations d'ensemble d'état de canal de fréquences dans le processus de réception d'informations d'ensemble d'état de canal, le terminal d'utilisateur secondaire met à jour les informations d'ensemble d'état de canal de fréquences reçues en balayant des états de canaux de fréquences montant/descendant avec la BS et transmet les informations d'ensemble d'état de canal de fréquences mises à jour à la BS.

9. Procédé selon la revendication 8, dans lequel, dans le processus de transmission d'informations mises à jour (314), des numéros de canaux et des niveaux de mesure d'ondes électroniques d'un ensemble actif et un nombre prédéterminé d'ensembles candidats sélectionnés sont transmis avec les informations d'ensemble d'état de canal de fréquences mises à jour.

10. Procédé selon l'une quelconque des revendications 7 à 9, dans lequel les informations d'ensemble d'état de canal de fréquences comprennent un ensemble actif qui est un ensemble de canaux de fréquences assignés à l'utilisateur secondaire, un ensemble candidat qui est un ensemble de canaux de fréquences non utilisés par l'utilisateur primaire et non assignés à un quelconque utilisateur secondaire, un ensemble occupé qui est un ensemble de canaux de fréquences utilisés par des utilisateurs primaires, et un ensemble vide qui est un ensemble de canaux de fréquences autorisés mais n'appartenant pas à l'ensemble actif, à l'ensemble candidat, ou à l'ensemble occupé.

11. Procédé selon la revendication 10, dans lequel la période de détection augmente dans l'ordre de l'ensemble actif, l'ensemble candidat et l'ensemble occupé.
